Europäisches Patentamt

European Patent Office

Office européen des brevets

(11) Veröffentlichungsnummer : **0 332 891 B1**

## (12) EUROPÄISCHE PATENTSCHRIFT

(45) Veröffentlichungstag der Patentschrift :
05.02.92 Patentblatt 92/06

(21) Anmeldenummer : **89103036.3**

(22) Anmeldetag : **22.02.89**

(51) Int. Cl.⁵ : **B01D 53/36**, F01N 3/00,
B01J 35/04

(54) Vorrichtung zur katalytischen Reinigung der Abgase einer Brennkraftmaschine und Verfahren zu
deren Herstellung.

(30) Priorität : **18.03.88 DE 3809105**

(43) Veröffentlichungstag der Anmeldung :
**20.09.89 Patentblatt 89/38**

(45) Bekanntmachung des Hinweises auf die
Patenterteilung :
**05.02.92 Patentblatt 92/06**

(84) Benannte Vertragsstaaten :
**DE FR GB IT SE**

(56) Entgegenhaltungen :
**EP-A- 0 218 062**
**EP-A- 0 245 737**

(73) Patentinhaber : **Firma J. Eberspächer**
**Eberspächer Strasse 24**
**W-7300 Esslingen (DE)**

(72) Erfinder : **Knetsch, Dieter**
**Blumenstrasse 10**
**W-7313 Reichenbach (DE)**
Erfinder : **Ullmann, Thomas**
**Hirschstrasse 15**
**W-7066 Hohengehren (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft eine Vorrichtung zur katalytischen Reinigung der Abgase einer Brennkraftmaschine, die einen in einem metallischen Gehäuse gehalterten metallischen Katalysatorträger aus lageweisen angeordneten glatten und gewellten Metallbändern aufweist und ein Verfahren zu deren Herstellung.

Derartige in einem metallischen Gehäuse gehalterte Katalysatorträgerkörper sind z.B. aus der DE-A-2302746 bekannt, nach der ein glattes und ein gewelltes Band zusammengeführt und gemeinsam gewickelt werden, so daß ein Katalysatorkörper entsteht, bei dem sich die Bänder spiralförmig um einen Wickelkern winden. Diese Anordnung hat insbesondere den erheblichen Nachteil, daß durch die Pulsation des Abgases der Wickelkern in Achsrichtung herausgedrückt wird, so daß eine in Achsrichtung kegelförmige Verformung stattfindet.

Weiterhin ist nach der EP-A-245737 ein Katalysatorträgerkörper bekannt, bei dem das Herausdrücken des Kernes verzögert wird. Bei dieser bekannten Anordnung wird der Katalysatorträgerkörper dadurch gebildet, daß bei einem Stapel von strukturierten Blechen die Enden jeweils gegensinnig um zwei Fixpunkte verschlungen werden und über diesen Formkörper ein Mantel geschoben wird. Nach dem dort offenbarten Verfahren lassen sich Körper unterschiedlicher Form bilden, wobei der Ausgangspunkt jeweils ein Stapel von strukturierten Blechen ist und die Herstellung über zuvor festgelegte Fixpunkte erfolgt, wobei in den Fixpunkten Gabeln oder dergleichen angreifen. Dabei muß bei besonderen Formen, wie z.B. für ovale Katalysatorträgerkörper, mit separat gefertigten Füllkörpern gearbeitet werden, die in den verwundenen Körper eingesetzt werden. Bei dieser Anordnung ist zwar die Gefahr des Herausdrückens des Körpers bzw. dessen Verformung in Axialrichtung herabgesetzt, nicht aber verhindert, wobei die Verformung besonders dann auftritt, wenn die einzelnen verwundenen Lagen mit dem Mantel unlösbar, z.B. durch Lötung, verbunden sind. Das hängt auch mit dem geometrischen, streng symmetrischen Aufbau zusammen.

Der Erfindung liegt die Aufgabe zugrunde, einen gattungsgemäßen Katalysatorträgerkörper aufzuzeigen, der einfach im Aufbau ist und durch seine Geometrie gegen Ausstülpen in Richtung der Beaufschlagung durch das Abgas gesichert und fest in dem als Gehäuse dienenden Mantel gehaltert ist und bei dem unterschiedliche Formen bei gleichem vorgefertigten Wickelkörper möglich sind.

Diese Aufgabe wird erfindungsgemäß dadurch gelöst, daß der Katalysatorträgerkörper als ein in das metallische Gehäuse eingesetzter, oval gewickelter, gegenläufig gefalteter und zu dem vorgegebenen Gehäusequerschnitt verformter Wickelkörper ausgebildet ist. Hierbei wird oval als Oberbegriff für verschiedene Formen verstanden, deren Merkmal die Längserstreckung des Wickelkörpers ist. So sind beispielsweise folgende Formen unter oval verstanden :

Halbkreisförmige Endabschnitte mit dazwischenliegendem Abschnitt mit parallel verlaufenden Bahnen, also im Querschnitt ein Rechteck, dessen gegenüberliegenden kurzen Seiten Halbkreise bilden oder eine Form mit halbkreisförmigen Enden und dazwischenliegendem konvexen oder konkaven Abschnitt, ferner ein Rechteck mit abgerundeten Ecken u.a.m. In einer bevorzugten Ausführung entsteht der als oval bezeichnete Wickelkörper durch Wickeln des lageweise aufeinanderliegenden Bandes — ein gewelltes, ein glattes Band — über zwei im Abstand zueinander angeordnete Dorne. Dabei weist der so entstandene Wickelkörper ein Verhältnis von Länge zu Breite von 1 : 4 bis 1 : 8 auf. Natürlich kann im Rahmen der Erfindung auch die Wicklung über mehrere Dorne erfolgen, je nach der vorgegebenen Endform des Katalysatorträgerkörpers.

Es hat sich gezeigt, daß bei dem erfindungsgemäßen Katalysatorträgerkörper durch die parallel verlaufenden Abschnitte des Wickelkörpers sich Querlamellen einstellen, die eine außerordentliche Festigkeit gegen Ausstülpen ergeben.

Der erfindungsgemäße Katalysatorträgerkörper wird in besonders vorteilhafter Weise durch folgende Verfahrensschritte hergestellt :

Zunächst erfolgt die Wicklung der aufeinanderliegenden glatten und gewellten Metallbänder zu einem ovalen Wickelkörper, sodann erfolgt ein gegenläufiges Falten dieses Wickelkörpers in eine Wellenform — z.B. S-Form oder Mäanderform —, sodann erfolgt ein Pressen in die vorgegebene Endform und schließlich das Einsetzen in einen metallischen Mantel, der als Gehäuse dient. Die Wicklung zu dem als oval bezeichneten Wickelkörper erfolgt beispielsweise über zwei im Abstand zueinander, auf einer drehbar gelagerten Scheibe angeordnete Dornen. Die gemeinsam zu wickelnden Bänder, ein glattes Band auf einem gewellten Band, können als abgelängte, getrennt hergestellte und aufeinandergelegte Bänder zugeführt werden. Gemäß eines besonders günstigen Verfahrens wird das gewellte Band und das glatte Band einstückig hergestellt und das eine Band auf das andere Band gefaltet. Der Wickelvorgang beginnt dann an der Faltstelle. Bei getrennt gefertigten Bändern brauchen diese nicht miteinander verbunden zu werden, obwohl es ohne weiteres auch möglich ist durch Löten oder andere bekannte punktweise Verbindungen das glatte mit dem gewellten Band an einigen Stellen, z.B. jeder zehnten oder dreißigsten Welle, mit einem oder mehreren Punkten auf der Breite des Bandes zu einer unlösbaren Verbindung zu fertigen. Für das Wickeln werden die beiden Bänder über einen der Dorne gelegt und durch Drehen der Scheibe mit den Dornen der Wickelkörper hergestellt.

Dabei ist es im Blick auf das nachfolgende Falten günstig, nur relativ lose zu wickeln. Bei dem genannten Beispiel entsteht durch das Wickeln über zwei Dorne ein Wickelkörper von ovaler Form. Diese Ausgangsform ist besonders gut geeignet für runde Katalysatorträgerkörper. Der wie beschrieben hergestellte Wickelkörper, der in der bevorzugten Ausführungsform ein Verhältnis von Länge zu Breite wie 1 : 4 bis 1 : 8 bei 10 bis 20 gewickelten Lagen aufweist, wird sodann durch gegenläufiges Falten in eine mindestens angenäherte Wellenform gebracht, im einfachsten Fall eine S-Form. Der derart verformte Wickelkörper wird sodann in die vorgegebene Form gepreßt, z.B. zu einem runden Katalysatorträgerkörper. Dies kann in einem einfachen Werkzeug erfolgen, bei dem zwei halbrunde Backen, zwischen denen der lose gefaltete Wickelkörper eingebracht ist, zusammengeführt werden zu einem kreisrunden Querschnitt und dabei den gefalteten Wickelkörper in die Endform bringen. Die Faltung des Wickelkörpers braucht dabei nur lose zu erfolgen. Wichtig ist, daß sie gegenläufig erfolgt und so der Wickelkörper verformt zum Zusammenpressen in die beschriebene Form eingebracht wird. Bei einer ovalen Form des Katalysatorträgerkörpers weist die Preßform entsprechend halbovale Form auf. Hierbei wird oval als etwa elliptisch im Querschnitt verstanden. In dieser einfachen Weise lassen sich auch andere symmetrische oder auch unsymmetrische Querschnitte des Katalysatorträgerkörpers, wie z.B. eine Bananenform, erreichen. Abschließend erfolgt das Einsetzen des verformten Wickelkörpers in einen metallischen Mantel. Dies geschieht z.B. dadurch, daß der vorgefertigte und entsprechend abgelängte Mantel, etwa ein Rohrstück, auf das Preßwerkzeug aufgesetzt und der Wickelkörper durch einen Stößel oder Kolben in das Rohr eingebracht wird. Durch die beim Pressen des Wickelkörpers in die Endform auftretende Vorspannung erfolgt ein sicherer Halt in dem Mantel, wobei für besonders durch Pulsation beanspruchte Katalysatorträgerkörper es auch möglich ist, in bekannter Weise den Wickelkörper mit dem Mantel durch Löten oder Punkten unlösbar zu verbinden.

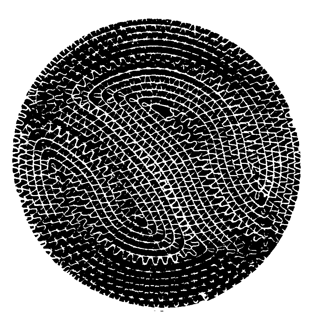

In der Abbildung ist ein fotomechanisch hergestelltes Bild eines Katalysatorträgers wiedergegeben. Durch die fotomechanische Herstellung des Bildes ist der Mantel nicht erkennbar, sondern nur der Querschnitt des Wickelkörpers. Die Abbildung läßt deutlich die Querlamellen erkennen, durch die eine besonders hohe Festigkeit gegen Ausstülpungen erreicht wird, ebenfalls, daß der Aufbau nicht streng symmetrisch ist, wobei die Abweichung von der Rotationssymmetrie desto größer ist, desto ungleichmäßiger die gegenläufige Faltung ist. Für den abgebildeten Wickelkörper wurde ein doppellagiges Band, einmal gewellt, einmal glatt, von je 2,75 m Länge über zwei Dorne im Abstand von 125 mm in 15 Lagen gewickelt. Der Wickelkörper hatte ein Verhältnis von Breite zu Länge von etwa 1 : 6,5, die Bandbreite betrug 75 mm. Der fertige Katalysatorträgerkörper hatte eine Länge von 80 mm, d.h. je Seite 2,5 mm Randüberstand des Mantels und einen Durchmesser von 70 mm. Dieser Katalysatorträgerkörper hat sich bei allen auftretenden Belastungen mechanischer und thermischer Art bestens bewährt, ebenso wurden wesentlich größere und kleinere Katalysatorträgerkörper in der beschriebenen Weise hergestellt und getestet und zeigten keine Verformungen oder Mängel.

## Patentansprüche

1. Vorrichtung zur katalytischen Reinigung des Abgases einer Brennkraftmaschine, die einen in einem metallischen Gehäuse gehalterten metallischen Katalysatorträger aus lageweise angeordneten, glatten und gewellten Metallbändern aufweist, dadurch gekennzeichnet, daß der Katalysatorträgerkörper als ein in das metallische Gehäuse eingesetzter oval gewickelter, gegenläufig gefalteter und zu dem vorgegebenen Gehäusequerschnitt verformter Wickelkörper ausgebildet ist.

2. Vorrichtung nach Anspruch 1, dadurch gekennzeichnet, daß der ovale Wickelkörper 10 bis 20 Lagen, vorzugsweise 15 Lagen, aufweist.

3. Verfahren zur Herstellung einer Vorrichtung nach Anspruch 1 oder 2, gekennzeichnet durch die Verfahrensschritte :

a) Wicklung der aufeinanderliegenden glatten und gewellten Metallbänder zu einem ovalen Wickelkörper,

b) gegenläufiges Falten des Wickelkörpers in eine mindestens angenäherte Wellenform,

c) Pressen dieses Körpers in die vorgegebene Endform,

d) Einsetzen des Wickelkörpers in einen metallischen Mantel.

4. Verfahren nach Anspruch 3, dadurch gekennzeichnet, daß das gewellte Band einstückig hergestellt und sodann das eine Band auf das andere Band gefaltet wird.

5. Verfahren nach Anspruch 3, dadurch gekennzeichnet, daß die Wicklung über zwei im Abstand zueinander angeordnete Dorne erfolgt.

6. Verfahren nach Anspruch 3, 4 oder 5, dadurch gekennzeichnet, daß die Wicklung des ovalen Wickelkörpers in einem Verhältnis Länge zu Breite von 1 : 4 bis 1 : 8, vorzugsweise 1 : 6,5, erfolgt.

7. Verfahren nach Anspruch 3, dadurch gekennzeichnet, daß bei dem Wickeln des gewellten Bandes mit dem glatten Band an einigen Punkten beide Bänder miteinander fest verbunden werden.

## Claims

1. Apparatus for the catalytic purification of the exhaust gas of an internal-combustion engine, which has a metal catalyst carrier which comprises smooth and wavy metal strips arranged in layers and is mounted in a metal housing, characterized in that the catalyst carrier body is constructed as a wound body which is inserted in the metal housing, wound ovally, folded in opposite directions and deformed to the predetermined cross-section of the housing.

2. Apparatus according to Claim 1, characterized in that the oval wound body has 10 to 20 layers, preferably 15 layers.

3. Process for manufacturing an apparatus according to Claim 1 or 2, characterized by the process steps :

a)     winding the smooth and wavy metal strips lying one on top of the other to form an oval wound body,

b)     folding the wound body in opposite directions into an at least approximate wave shape,

c)     pressing this body into the predetermined final shape,

d)     inserting the wound body into a metal casing.

4. Process according to Claim 3, characterized in that the wavy strip is manufactured in one piece and then one strip is folded onto the other strip.

5. Process according to Claim 3, characterized in that the winding is carried out over two mandrels arranged spaced from one another.

6. Process according to Claim 3, 4 or 5, characterized in that the winding of the oval wound body takes place with a ratio of length to width of 1 : 4 to 1 : 8, preferably 1 : 6.5.

7. Process according to Claim 3, characterized in that during winding of the wavy strip with the smooth strip both strips are securely connected to one another at certain points.

## Revendications

1. Dispositif pour la purification catalytique des gaz d'échappement d'un moteur à combustion interne, lequel comporte un support de catalyseur métallique qui est maintenu dans un carter métallique et qui est composé de bandes métalliques lisses et ondulées disposées en couches, caractérisé par le fait que le corps de support de catalyseur est réalisé sous la forme d'un corps enroulé qui est enroulé en ovale, qui est plié dans des directions opposées et qui est déformé pour arriver à la section transversale prédéterminée du carter et être inséré dans le carter métallique.

2. Dispositif selon la revendication 1, caractérisé par le fait que le corps enroulé ovale comporte de 10 à 20 couches, et de préférence 15 couches.

3. Procédé pour la fabrication d'un dispositif selon la revendication 1 ou 2, caractérisé par les étapes de procédé :

a)     Enroulement des bandes métalliques lisses et ondulées superposées pour former un corps enroulé ovale,

b)     Pliage du corps enroulé, dans des directions opposées et, du moins de manière approximative, en forme d'ondulations,

c)     Pressage de ce corps pour lui donner la forme finale prédéterminée,

d)     Insertion du corps enroulé dans une enveloppe métallique.

4. Procédé selon la revendication 3, caractérisé par le fait que la bande ondulée est fabriquée en une seule pièce et que l'une des bandes est ensuite pliée sur l'autre bande.

5. Procédé selon la revendication 3, caractérisé par le fait que l'enroulement a lieu sur deux mandrins disposés à distance l'un de l'autre.

6. Procédé selon la revendication 3, 4 ou 5, caractérisé par le fait que l'enroulement du corps enroulé ovale a lieu avec un rapport entre la longueur et la largeur qui est compris entre 1/4 et 1/8, et de préférence égal à 1/6,5.

7. Procédé selon la revendication 3, caractérisé par le fait que, lors de l'enroulement de la bande ondulée avec la bande lisse, les deux bandes sont reliées entre elles de manière solidaire en quelques points.